(19) Europäisches Patentamt
European Patent Office
Office européen des brevets

(11) **EP 4 495 079 A1**

(12) **EUROPEAN PATENT APPLICATION**

(43) Date of publication:
**22.01.2025 Bulletin 2025/04**

(21) Application number: **23185882.0**

(22) Date of filing: **17.07.2023**

(51) International Patent Classification (IPC):
**C04B 20/02** $^{(2006.01)}$     **C04B 20/10** $^{(2006.01)}$
**C04B 28/04** $^{(2006.01)}$

(52) Cooperative Patent Classification (CPC):
(C-Sets available)
**C04B 20/023; C04B 20/107; C04B 28/04;**
C04B 2103/0088                                        (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Etex Services NV**
**1880 Kapelle-op-den-Bos (BE)**

(72) Inventors:
• **GIJBELS, Katrijn**
  **3530 Houthalen (BE)**
• **VAN DER HEYDEN, Luc**
  **3190 Boortmeerbeek (BE)**
• **MAREELS, Joyce**
  **1840 Londerzeel (BE)**

(74) Representative: **Etex Services NV - Etex IPSC**
**Kuiermansstraat 1**
**1880 Kapelle-op-den-Bos (BE)**

(54) **CEMENTITIOUS MATERIAL, A METHOD OF GENERATING THEREOF AND USE THEREOF**

(57)    A method of generating a cementitious powder comprising the steps of:
- providing waste powder obtained from comminuting autoclave-cured waste material, which autoclave-cured waste material comprises a calcium silicate matrix, and
- carbonating said waste powder.

Fig. 1a

(52) Cooperative Patent Classification (CPC): (Cont.)

C-Sets
**C04B 20/023, C04B 18/167, C04B 20/026;**
**C04B 20/107, C04B 18/167;**
**C04B 28/04, C04B 14/26;**
C04B 2103/0088, C04B 14/26;
C04B 2103/0088, C04B 20/107

**Description**

FIELD OF THE INVENTION

The invention relates to a method of generating a cementitious powder, wherein a waste powder, such as recycled concrete paste, is carbonated.

The invention also relates to a cementitious powder thus obtained.

The invention further relates to the use of such a cementitious powder as a supplementary cementitious material, and/or in a cementitious material such as concrete.

BACKGROUND OF THE INVENTION

Carbonation of recycled concrete paste has been proposed and studied in recent years as a strategy to reduce the CO2-footprint of cement manufacture. A good overview of activities is given in M. Zajac et al, RILEM Technical Letters 6(2021), 53-60. Such recycled concrete paste essentially consists of hydrated cement fines and/or paste from recycled concrete. $CO_2$ originally released by limestone calcination during cement clinker production, could be sequestered through carbonation of recycled concrete paste. The authors add thereto as a requirement, that the recycled concrete paste should be present in the fine fraction from concrete recycling. This fine fraction may be separated from sand and aggregates, which are present in a fine fraction from concrete recycling. The authors admit in this respect, that such separation is challenging and requires advanced recycling technologies that are still under development. If the recycled concrete paste could be separated and carbonated, it might be used to replace clinker to a level of 20-40%.

During the carbonation of the hydrated cement paste, several reactions occur, which convert cement clinker phases and hydrates into calcium carbonate and an amorphous alumina-silica gel ($A_xS_y$-gel). Portlandite would react as the first phase followed by other hydrates along with the anhydrous calcium silicate phases from the cement clinker. Calcium carbonate is the main carbonation product, which precipitates as calcite in a wet carbonation reactor. The alumina-silica gel is amorphous and includes that aluminum in tetrahedral coordination, in the form of $Al(O-Si)_4$ sites, rather than a octahedral coordination in the uncarbonated sample.

Zajac et al. study the carbonation reaction and its potential application by carbonating hydrated Portland cement paste (CEM-I) for 360 minutes. In addition, they study a carbonated cement paste based on a slag containing composite cement. Such cement is a CEM-III type cement. The slag was GGBFS and was mixed with the cement as a 1:1 blend. Composite cements were then prepared using 60% of cement clinker and 40% of the thus obtained carbonated cement pastes. The compressive strength of the resulting composite cements was tested, at 1 day, 2 days, 7 days, 28 days and 90 days. It was found that the resulting composite cements had slightly lower strength relative to pure Portland cement.

However, the experiments of Zajac et al are not performed on the recycled and recovered, partially hydrated cement paste from the recycled concrete. The experiments were performed by carbonating a synthetized cement paste. This paste was made from fresh Portland cement CEM I 42.5 R with a water to binder ratio of 0.4, which paste was sealed and hydrated for 3 months at 40°C to achieve a high degree of hydration, corresponding to an old concrete. Thereafter the pastes were crushed and dried at 105°C to enable grinding of the material, see section 2.1 of Zajac et al, Cement and Concrete Research 130(2020), 105990. While the cement material of the synthetic paste was aged, a problem with recycling of the cement paste from concrete is the isolation thereof from other parts of the concrete. As discussed hereinabove, the isolation of such cement paste present on sand and aggregate surfaces is dependent on separation methods under development.

SUMMARY OF THE INVENTION

It is therefore desired and an object of the invention to provide a method of generating cementitious powder through carbonation, especially from recycled material, wherein the resulting cementitious powder indeed is capable of acting as a supplementary cementitious material to at least partially replace cement clinker and/or wherein the ingredients of such cementitious powder may be further separated into added value products of calcite and alumina-silica gel.

It is a further object of the invention to provide a resulting cementitious powder based on recycled material.

It is again a further object of the invention to provide the use thereof as supplementary cementitious material and the combination of the cementitious powder with further ingredients, particularly cement to obtain a fresh cementitious material.

According to a first aspect of the invention, a method of generating a cementitious powder is provided which method comprises the steps of: providing a waste powder obtained from comminuting autoclave-cured waste material that comprises a calcium silicate matrix provided with organic fibers, and carbonating said waste powder.

According to a second aspect of the invention, a cementitious powder is provided as obtainable in accordance with the method of the invention.

According to a third aspect of the invention, a cementitious powder is provided that is obtained from autoclave-cured waste material comprising a calcium silicate matrix that comprises at least 30wt% calcium carbonate, preferably in calcite form, and at least 40wt% of an amorphous silica-alumina phase, and preferably at least 50wt% of an amorphous silica-alumina phase, and wherein the silica-alumina phase comprises at least 75wt% of $SiO_2$. The cementitious powder is more particularly obtainable from the method of the invention.

According to a further aspect, use of the cementitious powder of the invention as a supplementary cementitious material (SCM) is provided.

According to again a further aspect, a cementitious material comprising Portland cement and the cementitious powder of the invention is provided.

The invention is based on the understanding that waste material from autoclave-cured products comprising a calcium silicate matrix is highly suitable and advantageous as a raw material for generating a cementitious powder by means of carbonation. This raw material does not need to be isolated from other portions of recycled concrete, but can be used on the basis of ground recycled material. Moreover, since autoclave-cured products are typically in use as panels, planks and construction boards, recycling of such products will lead to raw material of high quality and a comparatively uniform composition.

Beyond that autoclave-cured material is a practical raw material, the resulting cementitious powder turns out to have stronger pozzolanic properties and an improved microstructure than known cementitious powders obtained from carbonation of recycled concrete paste. The improvement particularly resides in a comparatively high content of the alumina-silica phase and therein a comparatively high concentration of silica.

In the context of this invention, autoclave-curing is a method of steam curing of a material comprising both a source calcium oxide and a source of silicon oxide, wherein the product is put to steam at a temperature above 100°C and at a pressure well above atmospheric pressure, such as at least 5 bar, for a predetermined period of time. Preferably, the temperature is above 150 °C and the pressure is at least 6 bars or even at least 7 bars. Under such conditions, calcium oxide and silica provided as raw materials will react to form calcium silicates, that might be present either in amorphous form, typically referred to as a calcium silicate hydrate (CSH) gel, or in the form of crystalline calcium silicate. An important crystalline phase is tobermorite, which is understood to contribute to the strength of the resulting material. Alternative crystalline phases of calcium silicate include xonotlite and wollastonite.

In one embodiment of the invention, the autoclave-cured waste material that comprises a calcium silicate matrix is waste material from a fibre cement product. Herein, the calcium source is cement, and further comprises organic fibers. This results in products that may have a comparatively high density, typically above 1.0 kg/dm$^3$, or even of at least 1.5 kg/dm$^3$. Autoclave-cured fibre cement products have properties such as flexural strength and structural integrity under freeze-thaw behaviour that renders them suitable for use in exterior applications. Moreover, these products are often produced and marketed to be decorative, due to the effective distribution of the fibers through the material and optionally any coating thereon. The organic fibers are typically cellulose fibers which serve as processing fibers and/or reinforcing fibers in the autoclave-cured material. The cellulose fiber preferably has a fineness as defined by Schopper-Riegler (SR) value of 10 to 40, preferably 15 to 30.

By further preference, autoclave-cured products for use in the method of the invention, have a density of at least 1.2 kg/dm3, more preferably at least 1.4 kg/dm3, or even 1.5 kg/dm3. Such products are known in the art as medium-density and high-density fiber cement products. Beyond being well-characterized, these products typically do not include major additives, such as low-density additives to obtain a low-density product. Hence, the effectively available raw material for generating the desired carbonated autoclave-cured cementitious powder is a medium-density or high-density fiber cement product.

In an alternative embodiment of the invention, the autoclave-cured waste material that comprises a calcium silicate matrix comprises agglomerates of crystalline wollastonite, xonotlite and/or tobermorite. These materials also comprise organic fibers, such as cellulose fibers. Materials comprising such agglomerates are developed and sold as fire-resistant panels. The agglomerates are preferably formed in a reaction comprising autoclave-curing, prior to the formation of a board. They are therefore referred to in the art as synthetic aggregates or synthetic wollastonite, synthetic xonotlite and the like. Such agglomerates may have a core-shell structure, wherein the shell comprises the crystalline material in a higher density than the core. Their manufacture is for instance disclosed in U.S. Pat. Nos. 3,501,324, 3,679,446 and 4,849,195 and in EP patent No. 0 009 836. T. An example of such agglomerate comprising xonotlite is sold by Promat NV under the trade name Promaxon®-D. Such materials typically have a density of at most 1.2 kg/dm$^3$, preferably at most 1.0 kg/dm$^3$.

In again an alternative embodiment, the autoclave-cured waste material is waste from autoclaved aerated concrete (AAC). Ingredients of AAC material are cement, quicklime, sand and/or fly-ash, foaming additives and water. Fibers and fillers are optional. AAC is aggregate-free. Autoclaved aerated concrete can be ground to obtain a powder material.

In order to achieve an adequate reaction between calcium oxide and silica, such a product preferably includes calcium and silicon in a predetermined mutual ratio. This ratio is known in the art as the $CaO/SiO_2$ molar ratio or C/S molar ratio. It is preferably in the range of 0.2-1.3, more preferably 0.25-0.8, even more preferably 0.45-0.70.. A typical composition includes 20-30 wt% CaO and 40-60 wt% SiO2. Therewith, the material is distinct from air-cured products and cement pastes that are primarily based on Portland cement, which air-cured products and cement pastes have a higher content of CaO and a lower content of SiO2. Please note that the molar ratio and the mass ratio herein are hardly different, as the molar mass of CaO is 56 and that of SiO2 is 60.

Preferably, the autoclave-cured products for use in the method of the invention further comprise a source of aluminum, such as bauxite, aluminiumtrihydroxide (ATH), kaolin, metakaolin or the like. A further source of aluminum may be perlite. It is known that the presence of some aluminum is beneficial for the development of strength of the products. Moreover, such aluminum is also effective for generating the alumina-silica phase during carbonation.

An advantageous production process for such fiber cement products is the Hatschek process, while alternative manufacturing processes are not excluded. Hence, the preferred raw material is an autoclave-cured material obtained by manufacturing according to the Hatschek process. In the Hatschek process, a stacked laminate of a plurality of monolayers is formed, each monolayer typically having a thickness of 0.1 to 0.9 mm and based on a composition comprising cement, SiO2 and cellulose fibers. Dewatering of these monolayers occurs at several stages of the Hatschek process. The resulting green sheet is compressed, in order to achieve a desired density. For high density products, the compression force is in the range of 20 MPa to 30 MPa. The material obtained from the Hatschek process is characterized by a comparatively high tobermorite content, as this is the calcium silicate phase that ensures strength notwithstanding the low amount of cement. Fiber cement products are frequently manufactured with the Hatschek process, but the Hatschek process is furthermore in use for the manufacture of calcium silicate boards, with a density of typically at most 1.0 kg/dm$^3$ and wherein cement is not present or merely used as an additive in amounts of for instance up to 10% by weight, such as for instance disclosed in GB2262543.

In again a further embodiment, the waste powder that is provided for carbonation, has a particle size distribution such that the d90 is less than 150 $\mu$m, preferably less than 100 $\mu$m, and wherein the d50 is preferably in the range of 10-60 $\mu$m, preferably 20-50 $\mu$m. The d50 is also known in the art as the median. Such as particle size distribution has the advantage that the powder has a sufficient surface area for effective carbonation. It is moreover feasible to obtain such particle size distribution in a limited number of comminution and separation steps.

In a further embodiment, the step of providing the waste powder comprises removing at least part of the organic fibers from said autoclave-cured waste. The removal of organic fibers facilitates that the resulting cementitious powder has a better flowability and thus processability. Moreover, fibers may render the cementitious powder less uniform, i.e. to vary more in dependence of the waste material. Preferably, the resulting amount of organic fibers is in the range of up to 6% by weight, for instance 2 to 5% by weight, based on the total dry weight of the composition of the cementitious powder.

In one advantageous embodiment, the organic fibers in the cementitious powder have an arithmetic average length (L(n)) in the range of 0.25 mm to 0.50 mm, preferably in the range of 0.30 mm to 0.45 mm. More preferably, said organic fibers have a polydispersity in the range of 1.05-1.25, preferably 1.10-1.20. The arithmetic average length is defined as specified in more detail in example 13 hereinbelow. Such a fiber length is advantageous in that the cementitious powder is well dispersible and does not hamper flowability. Such fiber length may be achieved with the method for comminution and fiber removal as specified hereinafter.

Generally, autoclave-cured fiber cement waste comprises at least 4% by weight of organic fibers and may be up to 15% by weight (based on total dry weight). Preferred amounts are in the range of 6-12% by weight, such as 7-10% by weight. Such fibers may reduce strength of any fresh cement product in which the carbonated material is included. Typically, the organic fibers are cellulose fibers, as most synthetic fibers, such as polyvinyl alcohol fibers do not withstand the conditions of autoclave curing. However, it is not excluded that synthetic fibers are present in a limited amount, such as for instance aramide fibers. The use of a combination of aramide fibers and cellulose fibers for manufacturing of autoclave-cured fiber cement products is described in the non-prepublished patent application EP22197132.8 in the name of applicant (internal reference FC2208EPp), which is included herein by reference.

Removal of fibers from waste powder is known per se, but is especially cumbersome for autoclave-cured fiber cement waste with a density of at least 1.2 kg/dm3. Such organic fibers are typically in use as reinforcing fibers, and the fibers may be selected and/or treated prior to the manufacture of the fiber cement product (or other product) so as to stimulate the fixation of the matrix therein. Due to this intricate distribution and often small fiber diameters, the removal from the matrix is difficult. In the light thereof, in a preferred method of removing at least part of the organic fibers from fiber cement waste, the method comprises the steps of grinding the autoclave-cured fiber cement waste, following by air-classification and sieving off the fibers. This method has been found effectively in order to remove the fibers, which are embedded in the fiber cement matrix and often also adhered thereof. The air-classification herein occurs in a closed circuit, such that classified material either goes back to communication or proceeds to the sieving step. The grinding step is for instance embodied by making use of a ball mill or a roller mill or a pendulum mill. Very good results have been achieved by using a vertical roller mill, in which the air-classifier is incorporated. The ground particles will herein be moved upwards to the air-classifier. It is deemed that this moving upwards within a single reactor is beneficial to enable removal of the fibers from the cement. It is especially preferred to ensure that the reactor is heated, for instance to a temperature of at least 40°C, or even at least 60°C. Bringing the ground particles in contact with heated air leads to drying, which is again deemed beneficial for an adequate separation. Upstream of grinding, the waste material may be pretreated in several stages, such as a rough size reduction step to achieve pieces of a few millimeters to centimeters, followed by a further comminution step. Also removal of (macroscopic) contaminants such as plastic parts may be performed, as known in waste recycling.

In a further embodiment, the waste powder is wetted prior to and/or during the carbonation treatment. Wetting preferably occurs to a mass ratio of water over binder (w/b) of at least 0.20, and preferably at most 0.4, and more preferably in the range of 0.25-0.35, when measured at the start of the carbonation step. The presence of sufficient water is understood to contribute to effective carbonation, i.e. the formation of $CO_3^{2-}$ from CO2 and H2O via H2CO3 and/or HCO3-, as known per se.

The carbonation step may itself be carried out in various ways. In one implementation, the carbonation is performed in a plurality of cycles, wherein prior to each cycle the cementitious powder is de-agglomerized and wetted. Alternatively, a specific reactor may be provided, wherein the cementitious powder is wetted and/or de-agglomerized during the carbonation, for instance by means of an effective mixing device. Zajac et al provide one implementation in Cement and Concrete Research, 130 (2020), 105990.

The resulting cementitious powder is preferably used as a supplementary cementitious material, that is to be mixed with cement clinker. Such mixing preferably occurs in the course of the grinding of the clinker, although mixing afterwards is not excluded. The resulting cementitious powder may otherwise be directly incorporated in a cement material or product, such as concrete, mortar, fiber cement or the like.

In one further embodiment, the cementitious powder comprises a mixture of carbonated waste fibre cement powder from autoclave-cured material and of carbonated waste fibre cement powder from air-cured material. A benefit of such mixing is that it allows a broader supply of waste material. Furthermore, it becomes feasible to tune the composition of the alumina-silica phase, and more particularly the SiO2-content therein. This may be useful to ensure that the composition of the alumina-silica phase will remain stable, notwithstanding variations in the supply of waste material. The mixing may be performed before or after carbonation. It appears preferable to perform mixing prior to carbonation. The mixing ratio A/B between autoclave-cured material (A) and air-cured material (B) is preferably chosen in the range of 0.25 to 100 on a weight-basis; a mixing ratio of at least 1 is deemed preferable, and a mixing ratio of at least 3 (25% air-cured material), at least 6 or at least 9 (10% air-cured material) is even more preferable. In one further embodiment, the mixing ratio may be in the ratio of 6 to 19 (5 to 17% air-cured material) and is intended to arrive at a predefined composition notwithstanding variations in supply of waste material.

In again a further embodiment, the waste powder may be mixed with a further material prior to carbonation or after carbonation, and preferably prior to carbonation. According to a first implementation thereof, such further materials include a recycled cement paste (i.e. without fibres), and/or a slag material, such as GGBFS as known per se to the skilled person. Hence, the further material is preferably a carbonatable material. According to a second implementation, thereof, the autoclave-cured waste material is mixed with another material, so as to arrive at a predefined density. When a material comprising crystalline calcium silicate aggregates, the initial density is below 1.0 kg/dm$^3$, whereas a waste material for high-density fiber cement products may have a density of at least 1.5 kg/dm$^3$, or even more. Mixing sources may thus be useful. In one specific implementation, autoclave-cured waste material comprising calcium silicate aggrgates is mixed with autoclave-cured fiber cement waste material, preferably fiber cement waste material from so-called medium-density or high-density products.

For sake of clarity, it is deemed preferable that such mixing occurs after comminution of the waste material and - if applied - after removal of fibers from the waste material. As the different waste sources may have a different density and/or different mechanical properties including hardness, it is deemed preferable to perform mixing powders rather than mixing blocks. The removal of fibers is herein helpful so as to ensure flowability of the powder and thus adequate mixing into a uniform powder mixture.

For sake of clarity it is observed that any of the implementation, embodiments and options as specified hereinabove, or hereinafter in the description of examples or in the dependent claims are applicable to all the aspects of the invention. Furthermore, any percentage referred to in the context of a composition is to be understood as a weight percentage based on the dry weight of the composition, unless otherwise indicated.

INTRODUCTION OF FIGURES

The method and the material of the invention will be further elucidated with reference to figures, wherein:

Fig. 1(a) and (b) show DTG graphs for the carbonated and uncarbonated material; Fig 1(a) relates to autoclave-cured material, fig 1(b) relates to air-cured material.
Fig. 2(a) and (b) show FTIR graphs for the carbonated and uncarbonated material; Fig. 2(a) relates to autoclave-cured material and Fig. 2(b) to air-cured material.

EXAMPLES

Example 1

Test samples 1 and 2 were prepared with compositions as shown in Table 1. A fiber cement sheet was prepared therewith using the Hatschek process. Composition 1 was cured by subjecting the fiber cement sheet to precuring at atmospheric conditions, followed by autoclave curing at 7 bar for 12 hours. Composition 2 was pre-cured during 1 night in a climatized room at around 50°C and thereafter cured in ambient conditions during 3 weeks. The samples had a density of around 1.4 g/cm$^3$. They represented recycled waste.

Table 1 - composition of samples, all values as weight% relative to dry weight of composition

| Composition | 1 | 2 |
|---|---|---|
| Portland cement type CEM I 42.5 R | 41 | 72 |
| Kaolin | 4 | - |
| Quartz | 47 | - |
| Cellulose fibers | 8 | 3 |
| Polyvinyl alcohol fiber | - | 2 |
| Limestone | - | 17 |
| Amorphous silica | - | 6 |

The cured sheets were cut in smaller pieces, after which the pieces were milled with a cutting mill (Retsch SM300 with a 500 μm sieve) to obtain a powdered material. This powdered material was dried in a laboratory oven at 105°C for 24 hours, and subsequently milled with a disk mill of type Retsch RS200 during 2 minutes. Finally, the powdered material was sieved over a 100 μm sieve. The residual waste from this process was 25% by weight.

X-ray fluorescence (XRF) was applied to identify the elemental composition of the samples. More generally, the amount of CaO in autoclave-cured samples is in the range of 20-30 wt%, and the amount of SiO2 is in the range of 45-65 wt%, such as 50-60wt%.

Table 2 - Elemental composition prior to carbonation measured at 1000°C by X-Ray diffraction (XRF)

| Composition | 1 | 2 |
|---|---|---|
| $Al_2O_3$ | 3 | 3 |
| CaO | 24 | 52 |
| $SiO_2$ | 55 | 19 |
| Other metal oxides (Na, K, Fe, Mg, Mn, ..) | 3 | 5 |
| SO3 and P2O5 | 1 | 2 |
| Loss on Ignition (LOI) | 14 | 19 |

Example 2

Part of the waste fibre cement powder (at least 500 gram per test sample) produced in Example 1 was put aside to be tested as non-carbonated material. Another part of the waste fibre cement powder (at least 500 gram per test sample) from Example 1 was carbonated. Thereto, the dried and milled powders were spread out in aluminium dishes (about 250 grams per dish). The weight of the dishes and the dry powders were measured, after which the dry powders were moistened with water under a mass ratio of water over dry powder of 0.35 was achieved. The moisture was applied by spraying. Thereafter, the weight of the powders was measured again. The powders were then subjected to pre-hydration by placing them in a chamber at a temperature of 60°C and a relative humidity RH of 90% during 72 hours. The powders agglomerated during this pre-hydration process. Hence, they were disturbed and de-agglomerated with a spatula, after which the powders were wetted again to a mass ratio of water over dry powder of 0.35. Weight was measured before and after wetting. The powders thereafter were subjected to carbonation in five consecutive cycles. Each carbonation cycle had a duration of 24 hours and was performed in a carbonation chamber at a temperature of 60°C, a relative humidity RH of 90% and a constant $CO_2$ inflow of 1.5 l/min to achieve a $CO_2$ concentration of 18% by volume or higher. Between each of the cycles, the agglomerated powders were disturbed and de-agglomerated with a spatula, and subsequently wetted until a mass ratio of water over dry powder of approximately 0.35. The samples were weighted before and after wetting. The powders were dried at 105°C for 24 hours after the last carbonation cycle, and the weight of the powders was measured before and after drying.

Example 3 - determination of $CO_2$-content

Generally, the $CO_2$-content in a sample can be derived from the total inorganic content (TIC), by multiplying the TIC with the ratio of molar mass of $CO_2$ to C (i.e. 3.667). The TIC can be found by measuring the total carbon content (TC) and the total organic carbon content (TOC) in a sample. The TIC is the difference of TC and TOC. As specified for instance in EN13639:2017, TOC and TC can be determined by oxidizing a sample at a temperature of 1300°C. In order to measure the TOC, the matter contributing to TIC needs to be removed first. This is done by treatment of a dried sample with strong acid, such as phosphoric acid (for instance in a 1:1 ratio). This determination of $CO_2$-content was performed for the cementitious powders 1 and 2 obtained in accordance with Example 2. Use in made of a carbon/sulfur analyzer EMIA-320V from Horiba to quantify TC and TOC, enabling calculation of TIC. The carbonation degree is determined as the CO2 degree relative to the theoretically maximum $CO_2$ degree as determined from XRF. The results are shown in Table 3

Table 3 - CO2 content and carbonation degree (measurement in mass% compared to total dry weight)

| Composition | Before /after carbonation | TIC | CO2 content | Increase | Max CO2 degree | Carbonation degree |
|---|---|---|---|---|---|---|
| 1 | Before | 0.6 | 2.2 | | 16.5 | 13% |
| 1 | After | 3.6 | 13.2 | 11.0 | 16.5 | 80% |
| 2 | Before | 2.6 | 9.4 | | 29.7 | 32% |
| 2 | After | 6.4 | 23.4 | 14.0 | 29.7 | 79% |

Table 3 shows that the TIC and CO2-degree in composition 2 was much higher before carbonation than in composition 1. This is due to the presence of limestone in the product composition, see Table 1. The increase in CO2 content is higher for composition 2 than for composition 1. The degree of carbonation is about 80% indicating that the laboratory method of carbonation in a plurality of cycles preceded by wetting is sufficiently good, though not perfect.

Example 4 - characterization of the carbonated material by DTG

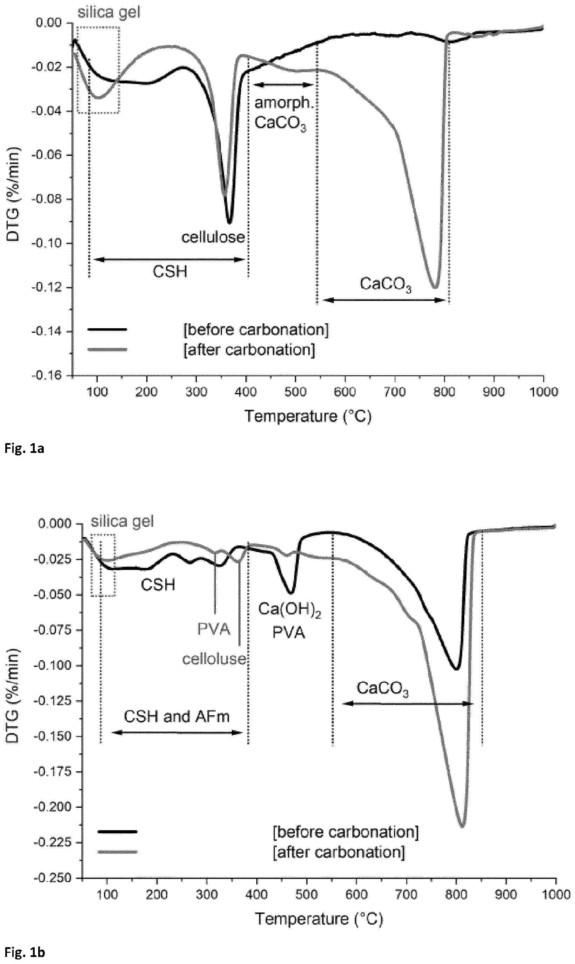

DTG (Difference Thermogravimetry) measures a ratio of Dm (weight loss or weight increase) at heating/cooling/isotherm, interpretation by Dm over T or time (-dm/dt). The DTG curve is the first derivative of the Thermogravimetry. Thereto, samples were heated from room temperature to 1000°C under $N_2$ atmosphere with a heating rate of 10 °C/minute. Results are shown in Fig. 1a and Fig 1b for compositions 1 and 2 respectively. Each figures includes a graph for the uncarbonated sample (solid black line) and carbonated sample (solid grey line). These graphs allow several observations.

First, a major peak is seen in the carbonated samples around 800°C, which is absent in the uncarbonated sample of composition 1 and smaller in the uncarbonated sample of composition 2. This peak originates from the $CaCO_3$, particularly in the form of well crystallized calcite.

Secondly, in Fig. 1a, it is apparent that a second peak is somewhat diminished and furthermore sharper. This peak originates from the cellulose in composition 1 and can be attributed to pyrolysis of fibers. In Fig. 1b, a peak attributed to a complex of polyvinyl alcohol (PVA) fiber and $Ca(OH)_2$ disappeared during carbonation and was replaced by a minor peak for PVA only. All this indicates that the sharpening of the cellulose peak in Fig. 1a (as a consequence of carbonation) may be due thereto, that the fibers in the carbonated sample are less or no longer adhesively bound to the inorganic matrix.

Thirdly, the graph of the carbonated sample in Fig. 1a includes a broad peak in the range of up to 200°C, which is absent in the uncarbonated sample and which is less pronounced in the carbonated sample of Fig. 1b. This broad peak is attributed to the presence of silica gel.

Example 5 - characterization of carbonated samples by FTIR

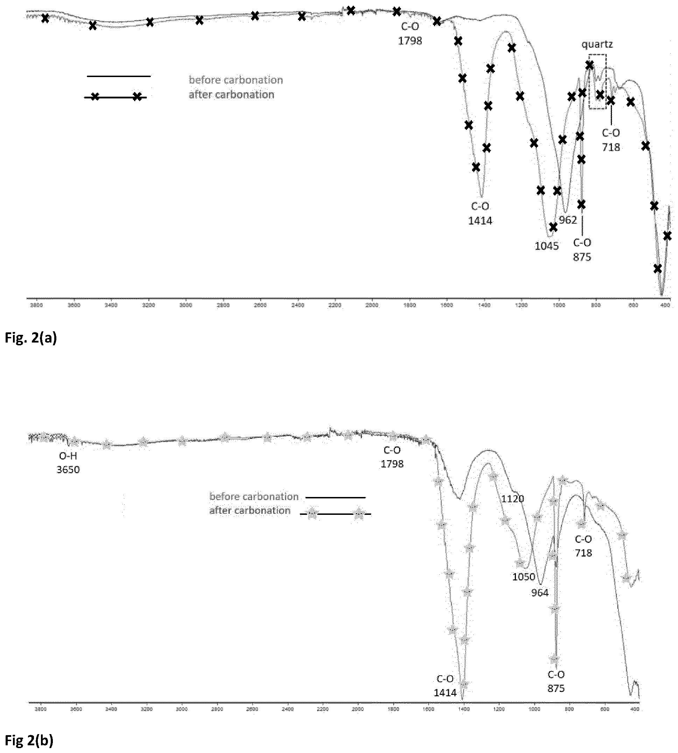

Further characterization was performed using Fourier Transform Infrared (FTIR) measurements, in order to understand what phases of silica were present in the carbonated samples. According to literature, a peak at 960 cm$^{-1}$ is associated with the vibration of Si-O bonds in the calcium-silicate hydrate gel (CSH). Fig. 2(a) show results for uncarbonated and carbonated samples of composition 1. Fig. 2(b) shows results for uncarbonated and carbonated samples of composition 2.

The results for the uncarbonated samples are shown in a solid line, and the results for the carbonated samples are shown in a line with crosses and stars.

The graphs for the uncarbonated samples are quite different, but both include a peak around 960 cm$^{-1}$ that can be attributed to the CSH gel. This peak has shifted and is increased in size in the carbonated samples. It furthermore is broader. This indicates a change in silicon-oxide bonding type. The peak at 960 cm$^{-1}$ is representative for Q1-configuration, wherein merely one oxygen atom bonded to a silicon atom is also bonded to a further silicon atom. The peak around 1045 cm$^{-1}$ is representative of a Q2-configuration, wherein two Si-O-Si bonds are present for a single Si-O-unit rather than one. The peak has a shoulder around 1160 cm$^{-1}$, that seems representative for Q3, i.e. even higher degree of polymerization of the Si-O unit. There is some variation between the graphs of the carbonated samples in Fig. 2(a) and Fig. 2(b). This may be due to the amounts of aluminum replacement of silicon in the Q2 and Q3 configurations.

It is furthermore observed that Fig 2(a) shows a peak representative for SiO2 in the carbonated and non-carbonated sample. That implies that non all quartz has been converted into the aluminate-silicate gel. In addition, both graphs include peaks at 718 cm$^{-1}$ and 1414 cm$^{-1}$ that can be attributed to calcium carbonate in crystalline form.

According to Zajac et al, Cement and Concrete Research 134 (2020), 106090, the carbonated material would contain calcite (47%), alumina-silica phase (50%) and a minor quantity of other (3%). In the present example, the carbonated autoclave-cured material contains 8% of cellulose fibers, and some residual quartz that is not converted. The overall amounts thereto are roughly 7% fiber, 13% residual quartz, 42% amorphous alumina-silica phase and 38% calcite. The mutual ratio of the alumina-silica phase and the calcite phase is about 1.10 in the present case and 1.06 according to Zajac et al.

It is noted therein that the present material originates from autoclave-cured material, which comprises relatively more SiO2 than the Portland cement used in Zajac et al. This is also apparent from the composition of the alumina-silica phase. According to Zajac et al, the phase comprises 67% SiO2, 19% Al2O3 and 14% other components, including 6% alkali metal oxides (Na2O, K2O), 3% earth alkali metals (MgO, CaO), 2% Fe2O3 and 3% SO3. In the present situation, the amount of SiO2 is estimated 85%, the Al2O3 is about 7%, and the others are about 8%, including 3% Fe. So, more generally speaking the amount of SiO2 is at least 75% by weight, or even at least 80% by weight, and the amount of alumina is less, up to 12%. Furthermore, the amount of alkali metal oxides is less. This leads to an alumina-silica phase, that is richer in silica, and hence would be characterized by a stronger pozzolanic behaviour.

Example 6 - BET surface area

BET specific surface areas were determined by nitrogen gas adsorption (porosimetry) based on the BET isotherm. Use was made of a Quantachrome Apparatus (Autosorb iQ Station 1) for automated gas sorption.

Table 4 - specific surface area of samples according to BET isotherm

| Composition | Before/after carbonation | Specific surface area (m$^2$/g) |
| --- | --- | --- |
| 1 | Before | 33 |
| 1 | After | 54 |
| 2 | Before | 14 |
| 2 | After | 43 |

It can be seen in this table that the specific surface areas strongly increased as an effect of carbonation. The resulting value is very high, since typical BET specific surface areas for limestone and silica fume (amorphous silica) are 1.3 m$^2$/g and 20 m$^2$/g. The BET value before carbonation is attributed to the presence of amorphous calcium-silicate hydrate (CSH) gel. The inventors believe that the further increase of the BET value induced by carbonation is due to the decalcification of the CSH-gel, the inclusion of alumina in this gel to obtain an alumina-silica gel. The high BET value is deemed representative for a high pozzolanic character of the material, that may contribute to a quick reaction with cement.

Example 7 - mortar sample preparation

Several binders for mortars were prepared by mixing the uncarbonated and carbonated samples with Portland cement CEM I, 42.5 R, in accordance with Table 5. For the preparation of three mortar samples per formulation, 450 gram binder, 1350 gram standard sand and 225 gram tap water are used. The binder includes herein both the Portland cement CEM I and the carbonated material, in the ratio set out in Table 5. Hence, for sample 13, the effective amount 360 gram CEM-I, 90 gram carbonated material, 1350 gram sand and 225 gram water.

Table 5 - prepared mortar formulations; * comparative examples

| | CEM-I | Composition 1 | | Composition 2 | |
|---|---|---|---|---|---|
| | | Uncarbonated | Carbonated | Uncarbonated | carbonated |
| Ref * | 100 | 0 | 0 | 0 | 0 |
| 11 | 95 | 0 | 5 | 0 | 0 |
| 12 | 90 | 0 | 10 | 0 | 0 |
| 13 | 80 | 0 | 20 | 0 | 0 |
| 14 * | 95 | 5 | 0 | 0 | 0 |
| 15 * | 90 | 10 | 0 | 0 | 0 |
| 16 * | 80 | 20 | 0 | 0 | 0 |
| 21 | 95 | 0 | 0 | 0 | 5 |
| 22 | 90 | 0 | 0 | 0 | 10 |
| 23 | 80 | 0 | 0 | 0 | 20 |
| 24 * | 95 | 0 | 0 | 5 | 0 |
| 25 * | 90 | 0 | 0 | 10 | 0 |
| 26 * | 80 | 0 | 0 | 20 | 0 |

At the age of 3 days, 7 days, 14 days and 28 days, three mortars (4 cm x 4 cm x 16 cm) per formulation are tested for compressive strength and for flexural strength. The strength data (expressed in MPa = kg/m2.s) of each of the samples was measured by making use of a UTS/INSTRON apparatus (type 3345, cel = 5000N).

Example 8 - compressive strength development of mortar formulations comprising composition 1 (waste fibre cement powder from autoclave cured material)

Table 6, 7 and 8 show the resulting data for the reference and the mortar formulations 11-16 for the compressive strength. All formulations include waste fibre cement powder from autoclave-cured material. Table 6 provides the absolute strength values. Table 7 shows the increase or decrease in strength relative to the reference. Table 8 shows the difference in strength between the carbonated and uncarbonated samples

Table 6 - compressive strength (MPa)

| | Compressive Strength of Mortar formulations (MPa) | | | | | | |
|---|---|---|---|---|---|---|---|
| | | Carbonated | | | uncarbonated | | |
| Age | Ref | 11 (5%) | 12 (10%) | 13 (20%) | 14 (5%) | 15 (10%) | 16 (20%) |
| 3 days | 28 | 28.5 | 28.4 | 23.7 | 26.9 | 24.9 | 20.9 |
| 7 days | 39.1 | 42.6 | 40.1 | 33.6 | 36.3 | 35.6 | 28.0 |
| 14 days | 48.4 | 50.1 | 49.8 | 42.6 | 45.8 | 42.5 | 34.1 |
| 28 days | 54.3 | 54.2 | 52.8 | 49.3 | 49.6 | 47.8 | 37.4 |

Table 7 - compressive strength increase or decrease relative to reference (in %)

| | Compressive Strength of Mortar formulations (MPa) | | | | | | |
|---|---|---|---|---|---|---|---|
| | | Carbonated | | | uncarbonated | | |
| Age | Ref | 11 (5%) | 12 (10%) | 13 (20%) | 14 (5%) | 15 (10%) | 16 (20%) |
| 3 days | - | + 1.7 | + 1.4 | - 15.5 | -4.7 | - 11.1 | -25.5 |
| 7 days | - | + 8.8 | + 2.5 | - 14.3 | - 7.3 | - 9.1 | - 28.5 |

(continued)

| | Compressive Strength of Mortar formulations (MPa) | | | | | | |
|---|---|---|---|---|---|---|---|
| | | Carbonated | | | uncarbonated | | |
| Age | Ref | 11 (5%) | 12 (10%) | 13 (20%) | 14 (5%) | 15 (10%) | 16 (20%) |
| 14 days | - | + 3.5 | + 2.8 | - 12.1 | - 5.4 | - 12.3 | - 29.6 |
| 28 days | - | + 1.4 | - 1.1 | -7.7 | -7.1 | - 10.6 | - 29.9 |

Table 8 - compressive strength difference between carbonated and uncarbonated samples. The percentages are calculated as the difference in compressive strength (in MPa) between the corresponding carbonated and uncarbonated sample, divided by the compressive strength value for the uncarbonated sample.

| | Compressive Strength of Mortar formulations (MPa) | | |
|---|---|---|---|
| Age | 5% addition | 10% addition | 20% addition |
| 3 days | + 6.7 % | + 14.0 % | + 13.4 % |
| 7 days | + 17.4 % | + 12.8 % | + 20.0 % |
| 14 days | + 9.4 % | +17.2 % | + 24.8 % |
| 28 days | + 9.1 % | +10.6 % | +31.7 % |

These tables demonstrate that the compressive strength of the mortars is improved significantly due to the carbonation. There is furthermore an improvement of the compressive strength for 5% and 10% addition of carbonated samples. The increase is most significant for the 5% addition after 7 days. After 28 days, the compressive strength of the formulations with 5 and 10% addition of carbonated material is nearly the same as that of the reference. This seems to imply that the carbonated material accelerates strength increase, without leading to an overall added strength.

The data for the 20% addition of carbonated material are highly interesting. In absolute terms, the compressive strength is lower than those of the reference. However, as is most easily visible in Table 7, it appears that the strength development is rather different than for the samples of 5% and 10%. Whereas the strength development of those samples is quite similar to that of the reference, but slightly quicker, the strength development of the sample with 20% addition is slower. After 28 days, the compressive strength is still lower than that of the reference, but the difference is decreased. It may be expected that the difference would be even smaller after 49 or 90 days. Furthermore, the difference in strength in comparison to the uncarbonated sample with 20% addition, only increases with the age of the mortar. This behaviour is different from the 5% and 10% additions. An explanation might be that at low addition percentages, the carbonated material does not have a major impact on the hardening of the cement. At higher addition percentages, however, the microstructure of the resulting mortar might change. A further explanation may be that the water-demand of the 20% addition is higher, and hence required more time and/or more water.

It is observed in this respect, that the binder with 5% carbonated material effectively contains about 0.36% of cellulose fibers. This fiber content is about 0.72% for the 10% addition and 1.44% for the 20% addition. This fiber content is quite high for the 20% addition, even when taking account that the fiber content in the mortar is further diluted due to the addition of sand. Still, the fiber content may have had a negative impact on the strength levels for the 20% addition.

The addition of uncarbonated material to the mortar leads to a decrease in strength. As it appears from Table 7, the relative decrease does not increase or decrease over time, and is further roughly linearly dependent on the added amount. Thus, the addition of uncarbonated material seems to be equivalent to the addition of filler material.

Example 9 - compressive strength development for samples comprising waste fibre cement powder from air-cured fiber cement

Table 9, 10 and 11 show the resulting data for the reference and the mortar formulations 11-16 for the compressive strength. All tables include data for samples comprising waste fibre cement powder from air-cured material. Table 9 provides the absolute strength values. Table 10 shows the increase or decrease in strength relative to the reference. Table 11 shows the difference in strength between the carbonated and uncarbonated samples.

Table 9 - compressive strength (MPa)

| | Compressive Strength of Mortar formulations (MPa) | | | | | | |
|---|---|---|---|---|---|---|---|
| | | Carbonated | | | uncarbonated | | |
| Age | Ref | 21 (5%) | 22 (10%) | 23 (20%) | 24 (5%) | 25 (10%) | 26 (20%) |
| 3 days | 28 | 27.5 | 24.1 | 20.7 | 23.8 | 22.0 | 19.4 |
| 7 days | 39.1 | 36.5 | 35.6 | 30.7 | 33.5 | 28.1 | 25.4 |
| 14 days | 48.4 | 44.6 | 41.5 | 36.6 | 43.0 | 36.2 | 32.0 |
| 28 days | 54.3 | 49.7 | 45.7 | 37.2 | 46.7 | 42.2 | 34.4 |

Table 10 - compressive strength increase or decrease relative to reference (in %)

| | Compressive Strength of Mortar formulations (MPa) | | | | | | |
|---|---|---|---|---|---|---|---|
| | | Carbonated | | | uncarbonated | | |
| Age | Ref | 21 (5%) | 22 (10%) | 23 (20%) | 24 (5%) | 25 (10%) | 26 (20%) |
| 3 days | - | -2.0 | - 13.9 | - 26.2 | - 15.1 | -21.6 | - 30.8 |
| 7 days | - | - 6.8 | - 9.0 | -21.5 | - 14.4 | - 28.3 | - 35.2 |
| 14 days | - | - 8.0 | - 14.4 | - 24.4 | - 11.3 | - 25.3 | - 33.9 |
| 28 days | - | -7.0 | - 14.4 | - 30.3 | - 12.6 | -21.1 | - 35.6 |

Table 11 - compressive strength difference between carbonated and uncarbonated samples. The percentages are calculated as the difference in compressive strength (in MPa) between the corresponding carbonated and uncarbonated sample, divided by the compressive strength value for the uncarbonated sample.

| | Compressive Strength of Mortar formulations (MPa) | | |
|---|---|---|---|
| Age | 5% addition | 10% addition | 20% addition |
| 3 days | + 15.5 % | + 9.7 % | + 6.6 % |
| 7 days | + 8.9 % | + 26.9 % | +21.2% |
| 14 days | + 3.8 % | +14.6% | + 14.5 % |
| 28 days | + 6.4 % | + 8.5 % | + 8.0 % |

The compressive strength levels of the samples including waste fibre cement powder from air-cured material are consistently lower than that of the reference. As can be most easily seen from Table 10, the decrease in strength increases with the amount of added material, both for the carbonated and the uncarbonated material. As can be most easily seen from Table 11, the addition of carbonated waste fibre cement powder from air-cured material provides gives better result than the addition of uncarbonated material. The difference seems to biggest after 7 days for the 10% and 20% addition, after which it decreases again. For the 5% addition, the same pattern is visible, except that the biggest improvement in strength is seen after 3 days. When comparing the values of Table 10 and Table 7, it appears that the decrease in strength is even bigger for the addition of uncarbonated waste fibre cement powder from air-cured material than for uncarbonated waste fibre cement powder from autoclave-cured material. The abnormal pattern found for the addition of 20% carbonated waste fibre cement powder from autoclave-cured material is not recognized for the addition of 20% carbonated waste fibre cement powder from air-cured material. Apparently, in the samples comprising waste fibre cement powder from air-cured material, the large content of $CaCO_3$ gives rise to a filler-like behaviour. In fact, as can be seen from Table 10, the loss in compressive strength after 28 days is quite linearly dependent on the amount of addition of carbonated material.

Example 10 - flexural strength development

Table 10 - flexural strength increase or decrease relative to reference (in %), value of reference in MPa

| | Flexural Strength of Mortar formulations comprising waste fibre cement powder from autoclaved material (MPa) | | | | | | |
|---|---|---|---|---|---|---|---|
| | | Carbonated | | | Uncarbonated | | |
| Age | Ref | 11 (5%) | 12 (10%) | 13 (20%) | 14 (5%) | 15 (10%) | 16 (20%) |
| 3 days | 6.2 | + 3 % | - 4% | -17 % | - 10 % | - 16% | - 31 % |
| 7 days | 8.1 | - 1 % | - 4% | - 15 % | - 13 % | - 15 % | - 33 % |
| 28 days | 9.0 | - 3% | 0% | - 7 % | - 11 % | - 16% | - 29% |

Table 10 - flexural strength increase or decrease relative to reference (in %), value of reference in MPa

| | Flexural Strength of Mortar formulations comprising waste fibre cement powder from air-cured material (MPa) | | | | | | |
|---|---|---|---|---|---|---|---|
| | | Carbonated | | | Uncarbonated | | |
| Age | Ref | 21 (5%) | 22 (10%) | 23 (20%) | 24 (5%) | 25 (10%) | 26 (20%) |
| 3 days | 6.2 | -4 % | -10 % | - 22 % | - 14 % | - 19 % | - 27 % |
| 7 days | 8.1 | -9 % | -16 % | - 22 % | - 19 % | - 26 % | - 36 % |
| 28 days | 9.0 | -7 % | -9 % | - 23 % | - 15 % | - 19% | - 27 % |

Table 10 and 11 show resulting flexural strength data for the reference in MPa and for the carbonated and uncarbonated samples. Table 10 relates to the addition of (waste fibre cement powder from) autoclaved material, Table 11 relates to the addition of (waste fibre cement powder from) air-cured material. It is apparent from the data that the addition of carbonated autoclaved material provides the best results. The flexural strength for the addition of 5% and 10% is very close to the reference value. As it was seen for the compressive strength, the flexural strength values for the 20% addition improve with age, but at 28 days the strength is still less than that of the reference. The data on flexural strength have larger spread than those for compressive strength. The behaviour found for flexural strength seems generally in line with the behaviour found for compressive strength.

Example 11

A further test sample was prepared from calcium silicate boards, which are in use as fire-resistant building boards. Sample 3 was obtained from a calcium silicate board manufacturing in a Hatschek process followed by autoclave-curing and comprising 4% by weight of cellulose fibers, wherein the weight% is based on total dry weight of the composition. The density of the calcium silicate board was 870 kg/m$^3$ when measured after drying at 105°C. The cured sheets were cut in smaller pieces, after which the pieces were milled with a cutting mill (Retsch SM300 with a 500 $\mu$m sieve, and thereafter milling with a Retsch disk mill RS200 for 2 minutes) to obtain a powdered material. The material was sieved through a sieve of 100 $\mu$m. Carbonation was performed batch wise as specified in Example 2 at a temperature of 60°C, relative humidity of 90%, CO2-concentration of 18 % by volume and a water/solid mass ratio of 0.35 at the start of carbonation. After carbonation, the samples were dried at 105°C for 24 hours and milled with a Retch disk mill RS200 for 30 seconds.

The mineral composition before and after carbonation was determined by XRF. Loss on Ignition (LOI) was determined by heating to 1000°C. Results are shown in Table 11.

Table 11 - XRF and LOI results for compositions 1, 2 and 3.

| Composition | 1 | 2* | 3 | 3 |
|---|---|---|---|---|
| Origin powder | Autoclave-cured fiber cement | Air-cured fiber cement | Autoclave-cured calcium silicate | Autoclave-cured calcium silicate |
| Before/after carbonation | Before | Before | Before | After |
| Al$_2$O$_3$ (wt%) | 3 | 3 | 2.3 | 2.1 |
| CaO (wt%) | 24 | 52 | 34 | 31 |

(continued)

| Composition | 1 | 2* | 3 | 3 |
|---|---|---|---|---|
| $SiO_2$ (wt%) | 55 | 19 | 46 | 42 |
| Other ($Fe_2O_3$, $K_2O$, MgO, $Mn_2O_3$, $Na_2O$, $TiO_2$) (wt%) | 3 | 5 | 2.4 | 2.2 |
| $P_2O_5$ + $SO_3$ (wt%) | 1 | 2 | 0.4 | 0.3 |
| LOI (wt%) | 14 | 19 | 15 | 24 |

Table 11 shows that the composition of the calcium silicate board is comparable to the autoclave-cured fiber cement board, however with more CaO and less SiO2.

Further characterization tests were done to determine the total organic content (TOC0, total inorganic content (TIC), CO2 content, density, specific surface area (BET) and tobermorite content. Methods were used in accordance with examples 3-6. The density was determined by pycnometry. Tobermorite content was determined by XRD. Results are shown in Table 12. Results for the powder from air-cured fiber cement is put to the right hand of the table.

Table 12 - characterization of samples

| Composition | 1 | 1 | 3 | 3 | 2* | 2* |
|---|---|---|---|---|---|---|
| Before/after carbonation | Before | After | Before | After | Before | After |
| TIC (wt%) | 0.6 | 3.6 | 2.1 | 4.8 | 2.6 | 6.4 |
| $CO_2$ (wt%) | 2.2 | 13.2 | 7.7 | 17.6 | 9.4 | 23.4 |
| Density (g/cm$^3$) | 2.46 | 2.40 | 2.54 | 2.46 | 2.31 | 2.49 |
| Tobermorite (wt%) | 24 | < 0.02 | 21 | < 0,02 | < 0.02 | < 0.02 |
| BET (m$^2$/g) | 33 | 54 | 22 | 39 | 14 | 43 |

The total inorganic content of the calcium silicate boards lies between the values for the autoclave-cured and the air-cured fiber cement materials. The increase in TIC after carbonation is however less than in the air-cured fiber cement material. This seems consistent with the lower content of CaO in the material, as shown in Table 11.

The density of the material decreases upon carbonation in the same manner as for the autoclave-cured fiber cement material. This is opposed to the comparatively large increase in density of the air-cured material. The latter increase in density for the air-cured material is believed to be due to conversion of amorphous calcium silicate hydrate gel into calcium carbonate. In the calcium silicate material, the tobermorite content has decreased from more than 20% to 0%. It is believed that the tobermorite is converted into a calcium silicate gel and into calcium carbonate.

The specific surface area as measured in accordance with the BET isotherm using nitrogen adsorption increases. The increase for sample 3 is somewhat less than for the sample 1, both autoclave-cured materials (17 m$^2$/g versus 19 m$^2$/g). The increase in specific surface area for sample 3 is significantly less than for the air-cured fiber cement material (29 m$^2$/g). The resulting surface area of sample 3 also is lower, although it is nevertheless much bigger than the specific surface area of limestone and silica fume.

It can be concluded that the behaviour of sample 3 in carbonation corresponds to that of sample 1, especially with respect to changes in density, surface area and tobermorite content.

Therefore, it is expected that the partial substitution of cement by sample 3 after carbonation results in a stronger pozzolanic effect and advantageous flexural and compressive strength, as seen for sample 1 in examples 8 and 10.

Example 12 - fiber content of the powders

Production waste from autoclave-cured fiber cement material with a density of 1.6 kg/dm$^3$ was recycled. Thereto, the material was first crushed into crushed material by means of a shredder followed by a hammer mill. The resulting material has a characteristic size from about 3 mm to 5 cm in diameter. The crushed material is transported to a micronizing apparatus. This apparatus comprises a vertical roller mill and an air classifier. The vertical roller mill is present in a milling chamber through which the ground material may flow to the air classifier. The milling chamber is heated by means of heated air flow to a temperature of approximately 70-90 °C. The roller mill is operated at comparatively low pressure so as to form agglomerates of inorganic powder and fibers. The heated air flow in the milling chamber leads to drying of the agglomerates. The thus dried agglomerates may fall apart into inorganic powder and fibers. The operation of the air classifier may further contribute thereto. The air classifier has a characteristic setting in the range of 100-150 $\mu$m, for instance 125$\mu$m. Ground material passing the air classifier is sieved over a sieve of for instance 150 $\mu$m. The sieve is effective to remove a significant portion of the fibers. Herewith, the organic content of the material was reduced from 3.03% to 2.01% as defined by organic carbon content. 1% organic carbon content corresponds to approximately 2.5% by weight of the composition. A particle size distribution before and after sieving is shown in Table 13.

Table 13 - particle size distribution of cementitious powder before and after sieving over a 150$\mu$m sieve.

|  | Before sieving | After sieving |
| --- | --- | --- |
| D90 ($\mu$m) | 93.3 | 63.0 |
| D75 ($\mu$m) | 40.2 | 33.9 |
| D50 ($\mu$m) | 19.0 | 16.9 |
| D25 ($\mu$m) | 7.1 | 6.7 |
| D10 ($\mu$m) | 2.1 | 2.0 |

Example 13

Test were performed to determine the average fiber length in samples after sieving through a 150$\mu$m sieve. This material comprising both fibers and inorganic powder was treated in a Resch Vibratory Sieve Shaker during 5 minutes. In the apparatus, sieves of 150 $\mu$m, 100 $\mu$m and 75 $\mu$m were used. On each sieve, a fibre-rich layer was generated on top of the inorganic powder. Thereafter, the fibre-rich layers were removed from the inorganic powder and were combined into one fiber sample. The removed fiber sample still comprises inorganic powder. This contamination is however sufficiently small so that it does not hamper or disturb operation of the measurement apparatus. It was observed that the fibre-rich layer was thickest on the 150 $\mu$m sieve and thinnest on the 75 $\mu$m sieve.

The average fiber length was thereafter determined for the separated fibres by means of a Valmet FS5 apparatus, which is a fiber image analyzer for automated fiber measurements. This apparatus comprises a camera using UHD (ultra-high density) image resolution, which is also marketed as 4K resolution having a resolution of 4096 x 2160 pixels. The fiber length is measured by the apparatus in accordance with the ISO 16065-2 standard, hence using unpolarized light.

The measured fiber length can be specified in different ways. A distinction is to be made between the arithmetic average length of fibre L(n), as can be obtained by optical microscopy, and the length weight average fiber length L(i), as often used in the wood pulp industry. Herein:

$$L(n) = \sum(ni * li) / \sum(ni) \qquad (1)$$

$$L(i) = \sum([li*ni]*li)/\sum[li* ni] \qquad (2).$$

The ratio of the two different average fiber length (L(i)/L(n) is the polydispersity, and a measure of the broadness of the length distribution.

The average fiber length was determined for the cementitious powders with compositions 1, 2 and 3 obtained after sieving through a 150$\mu$m sieve in accordance with Example 1 and Example 2 (Samples 1 and 2 respectively). It was furthermore determined for another cementitious powder obtained from autoclave-cured production waste (Sample 3) and for a reference sample. This reference sample was a fresh cellulose mixture for use in an autoclave-curable fiber cement composition.

Results are shown in Table 14

Table 14

| Sample | L(n) (mm) | L(i) (mm) | L(i)/L(n) |
| --- | --- | --- | --- |
| 1 | 0.33 | 0.38 | 1.15 |
| 2 | 0.40 | 0.46 | 1.15 |
| 3 | 0.36 | 0.42 | 1.17 |
| Ref | 0.88 | 1.54 | 1.75 |

The sieved portions of sample 2 were analysed separately. Results are shown in Table 15

Table 15

| Sample | Sieve size | L(n) (mm) | L(i) (mm) | L(i)/L(n) |
|--------|-----------|-----------|-----------|-----------|
| 1(1) | 75 $\mu$m | 0.28 | 0.30 | 1.07 |
| 1(2) | 100 $\mu$m | 0.37 | 0.40 | 1.08 |
| 1(3) | 150 $\mu$m | 0.51 | 0.56 | 1.10 |

From the results in Table 14 it can be derived that the fibers in the cementitious powder have an arithmetic average length L(n) in the range of 0.30 mm to 0.45 mm, a length weight average length L(i) in the range of 0.35 mm to 0.50 mm, and a polydispersity L(i)/L(n) in the range of 1.10-1.20. It is apparent that the average fiber length is well above the 150 $\mu$m sieving.

In comparison to the fresh fibers, the average length is clearly much shorter. In fact, taking account thereof that approximately one third of the fiber weight is removed and that the fiber length is reduced to 30-50%, such as 35-40% (0.33/0.88 = 0.375), the overall number of fibers in the cementitious powder per unit of mass will be larger than the number of fibers in the waste material (or the fresh material).

Furthermore, the polydispersity is reduced in comparison to a sample of fresh cellulose fibers. The low polydispersity is an indicator that the fibers have not been pulverized. Moreover, this low polydispersity is an indicator that the cementitious powder is useful for reuse into a variety of cementitious products such as fiber cement products, concrete, mortars and as in cement material. Due to the comparatively short length of the fibres, the cementitious powder is well dispersible.

**Claims**

1. A method of generating a cementitious powder comprising the steps of:

   - providing waste powder obtained from comminuting autoclave-cured waste material, which autoclave-cured waste material comprises a calcium silicate matrix, and
   - carbonating said waste powder.

2. The method as claimed in claim 1, wherein said autoclave-cured waste material is obtained by (autoclave) curing a composition comprising calcium oxide and silicon oxide in a mutual molar ratio in the range of 0.2-1.3, preferably 0.25-0.8, more preferably 0.45-0.70, and wherein said composition optionally further comprises a source of aluminum.

3. The method as claimed in any of the preceding claims, wherein the waste powder has a particle size distribution such that the d90 is less than 150$\mu$m, preferably less than 100$\mu$m, and wherein the d50 is preferably in the range of 10-60 $\mu$m, preferably 20-50 $\mu$m.

4. The method as claimed in any of the preceding claims, wherein said autoclave-cured waste material further comprises organic fibers.

5. The method as claimed in claim 4, wherein the step of providing the waste powder comprises removing at least part of organic fibers from said autoclave-cured waste material.

6. The method as claimed in claim 5, wherein the removal of fibers is performed by grinding the autoclave-cured waste material, followed by air-classifying and sieving off said fibers, wherein said grinding step is for instance performed in a vertical roller mill.

7. The method as claimed in any of the preceding claims, wherein said autoclave-cured waste material is autoclave-cured fiber cement waste material, wherein said autoclave-cured fiber cement waste material preferably has a density of at least 1.2 kg/dm³.

8. The method as claimed in any of the preceding claims 1-7, wherein said autoclave-cured waste material comprises agglomerates of wollastonite and/or xonotlite crystals.

9. A cementitious powder obtainable by the method as claimed in any of the preceding claims.

10. A cementitious powder, particularly as claimed in claim 9, obtained from autoclave-cured waste material comprising a calcium silicate matrix, and comprising at least 30wt% calcium carbonate, preferably in the form of calcite, and at least 40wt% of an amorphous silica-alumina phase, and preferably at least 50wt% of an amorphous silica-alumina phase, and wherein the silica-alumina phase comprises at least 75wt% of $SiO_2$.

11. The cementitious powder as claimed in any of the claims 9-10, comprising organic fibers.

12. The cementitious powder as claimed in claim 11, wherein the organic fibers are present in an amount of up to at most 6wt%, based on dry weight, preferably in the range of 2 to 5 weight%.

13. The cementitious powder as claimed in claim 10-12, having a BET specific surface area of at least 30 $m^2$/g, preferably at least 40 $m^2$/g.

14. Use of the cementitious powder as claimed in any of the claims 10-13 as a supplementary cementitious material (SCM).

15. A cementitious material comprising Portland cement and the cementitious powder as claimed in any of the claims 10-13, for instance being a concrete material or being provided with a fiber cement composition comprising organic fibers in addition to any fibers present in the cementitious powder.

Fig. 1a

Fig. 1b

**Fig. 2(a)**

**Fig 2(b)**

Europäisches Patentamt

European Patent Office

Office européen des brevets

# EUROPEAN SEARCH REPORT

**Application Number**

EP 23 18 5882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 095 110 A1 (HEIDELBERGCEMENT AG [DE]) 30 November 2022 (2022-11-30) | 1,3, 8-10, 13-15 | INV. C04B20/02 C04B20/10 |
| Y | * claims * <br> * paragraph [0029] * | 2,4-7, 11,12 | C04B28/04 |
| X | EP 4 155 278 A1 (HEIDELBERGCEMENT AG [DE]) 29 March 2023 (2023-03-29) | 1,3,9, 10,13-15 | |
| Y | * claims * <br> * paragraph [0047] – paragraph [0048] * | 2,4-7, 11,12 | |
| Y | JP 2000 247721 A (NICHIAS CORP) 12 September 2000 (2000-09-12) <br> * claims * | 2 | |
| Y | JP 2004 217482 A (KMEW KUBOTA MATSUSHITADENKO) 5 August 2004 (2004-08-05) <br> * claims * | 4-7,11, 12 | |
| A | WO 2022/194559 A1 (HEIDELBERGCEMENT AG [DE]; HCONNECT 2 GMBH [DE]) 22 September 2022 (2022-09-22) <br> * paragraph [0054] – paragraph [0057] * | 1-15 | **TECHNICAL FIELDS SEARCHED (IPC)** <br><br> C04B |

The present search report has been drawn up for all claims

| Place of search | Date of completion of the search | Examiner |
|---|---|---|
| Munich | 1 December 2023 | Zimpfer, Emmanuel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 5882

This annex lists the patent family members relating to the patent documents cited in the above-mentioned European search report.
The members are as contained in the European Patent Office EDP file on
The European Patent Office is in no way liable for these particulars which are merely given for the purpose of information.

01-12-2023

| Patent document cited in search report | | Publication date | Patent family member(s) | | Publication date |
|---|---|---|---|---|---|
| EP 4095110 | A1 | 30-11-2022 | AU | 2022283489 A1 | 09-11-2023 |
| | | | CA | 3218142 A1 | 01-12-2022 |
| | | | EP | 4095110 A1 | 30-11-2022 |
| | | | WO | 2022248179 A1 | 01-12-2022 |
| EP 4155278 | A1 | 29-03-2023 | EP | 4155278 A1 | 29-03-2023 |
| | | | WO | 2023046498 A1 | 30-03-2023 |
| JP 2000247721 | A | 12-09-2000 | NONE | | |
| JP 2004217482 | A | 05-08-2004 | NONE | | |
| WO 2022194559 | A1 | 22-09-2022 | AU | 2022239669 A1 | 24-08-2023 |
| | | | CA | 3209650 A1 | 22-09-2022 |
| | | | EP | 4059905 A1 | 21-09-2022 |
| | | | WO | 2022194559 A1 | 22-09-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3501324 A
- US 3679446 A
- US 4849195 A
- EP 0009836 A
- GB 2262543 A
- EP 22197132

**Non-patent literature cited in the description**

- **M. ZAJAC et al.** *RILEM Technical Letters*, 2021, vol. 6, 53-60
- **ZAJAC et al.** *Cement and Concrete Research*, 2020, vol. 130, 105990
- **ZAJAC et al.** provide one implementation. *Cement and Concrete Research*, 2020, vol. 130, 105990
- **ZAJAC et al.** *Cement and Concrete Research*, 2020, vol. 134, 106090